# EUROPEAN PATENT APPLICATION

(11) **EP 3 513 652 A1**
(43) Date of publication of application: **24.07.2019**
(21) Application number: 17850584.8
(22) Date of filing: 07.08.2017
(51) Int. Cl.: A01K 61/54, A01K 61/30, A01K 63/00

(54) **AQUATIC ORGANISM REARING DEVICE**

(30) Priority: 14.09.2016 JP 2016179990
(71) Applicant: Yanmar Co., Ltd., Osaka-shi, Osaka 530-8311 (JP)
(72) Inventor: KATO, Motoichi, Osaka-shi, Osaka 530-8311 (JP); TERAI, Shima, Osaka-shi, Osaka 530-8311 (JP); TAKAHASHI, Mitsuo, Osaka-shi, Osaka 530-8311 (JP)
(74) Representative: Kuhnen & Wacker Patent- und Rechtsanwaltsbüro PartG mbB
(86) International application number: PCT/JP2017/028544
(87) International publication number: WO 2018/051678

(57) **Abstract**

An aquatic creature rearing apparatus according to the present invention includes: a tubular container with an opened lower surface; a mesh structure that is attached to the lower surface of the container and has mesh spacing dependent on size of an aquatic creature accommodated in the container; a water lifting pipe that is connected to an upper outer surface of the container and comes into communication with inside of the container; an air delivery pipe that is connected to a base of the water lifting pipe; and an air pump that supplies air into the water lifting pipe through the air delivery pipe. In the rearing apparatus, an ascending flow is generated in the container and water lifting pipe by airlift action by operating the air pump to cause bubbles in the water lifting pipe.

## Description

### Technical Field

The present invention relates to techniques for efficiently rearing aquatic creatures, such as bivalves including oysters, short-necked clams, common orient clams, bloody clams, mirugai clams, heart clams, purple butter clams, hard clams, california cockles, etc., or sea cucumbers.

### Background Art

The upwelling system is widely known as one of conventional methods for raising juvenile shellfish of bivalves (see e.g. Patent Literature 1, hereinafter PTL1). In this system, juvenile shellfish are accommodated in a tubular rearing container with a bottom surface having a mesh structure and an ascending flow is generated in the container by using an underwater pump or an air pump as a water lifting driver so that natural feed contained in the water can be provided efficiently.

In the system known as "FLUPSY," which employs equipment including a discharge channel and a frame for holding a plurality of rearing containers with openings that are provided in respective upper portions of the rearing containers and face the channel, an ascending flow is generated by drawing water in the containers through the channel by using an underwater pump. In another system known as the airlift system, where a bent-shaped water lifting pipe is disposed in a rearing container, an ascending flow is generated by allowing ventilation from an air pump into an intermediate portion of the pipe and utilizing the airlift action of issuing bubbles.

### Citation List

### Patent Literature

PTL1: Japanese Patent Application Laid-Open No. 2012-244960

### Summary of Invention

### Technical Problem

In such a system as the technique described in PTL 1, an underwater pump common to a plurality of rearing containers provided in a channel is used to lift water. According to this system, equipment increases in size and adjusting the amount of water lifted for each rearing container is difficult. In addition, the system requires time and cost for maintenance because organisms, which need to be removed, can easily adhere in placing the pump as a water lifting driver in the water, and rust and the like can cause serious erosion.

According to the conventional airlift system, a water lifting pipe is placed in a rearing container and thus, the length of the water lifting pipe is restrained and securing a sufficient amount of water lifted is difficult. Further, in both the system using an underwater pump and the airlift system, it is difficult to flexibly set the depth for placement of a rearing container.

In view of the foregoing circumstances, the present invention is aimed at providing techniques for flexibly changing the depth of water lifting in an aquatic creature rearing apparatus that employs upwelling by the airlift system while securing a sufficient amount of water lifted.

### Solution to Problem

An aquatic creature rearing apparatus according to an aspect of the present invention includes: a tubular container with an opened lower surface; a mesh structure that is attached to the lower surface of the container and has mesh spacing dependent on size of an aquatic creature accommodated in the container; a water lifting pipe that is connected to an upper outer surface of the container and comes into communication with inside of the container; an air delivery pipe that is connected to a base of the water lifting pipe; and an air pump that supplies air into the water lifting pipe through the air delivery pipe. In the rearing apparatus, an ascending flow is generated in the container and water lifting pipe by airlift action by operating the air pump to cause bubbles in the water lifting pipe.

Thus, since the water lifting pipe is placed outside the container, restraints on the length of the water lifting pipe can be removed and the water lifting depth can be adjusted as desired by changing the length of the water lifting pipe while securing an amount of water lifted. Further, through the employment of the airlift system, the air pump as a water lifting driver can be kept out of contact with water and maintainability can be increased.

A mesh is provided on an inner surface of the water lifting pipe, the mesh having mesh spacing dependent on the size of the aquatic creature accommodated in the container.

Thus, as a result of providing the mesh on the inner surface of the water lifting pipe, this mesh cooperates with the mesh structure provided on the lower surface of the container to block the upper and lower sides of the container and the water lifting pipe. Accordingly, the inside can be an isolated space for aquatic creatures and dispersion of the aquatic creatures can be reliably avoided.

The container includes a tubular body with an upper surface and a lower surface that are opened, and a lid that covers the upper surface of the body and is attached to the body so as to be detachable as desired, and the water lifting pipe is connected to the lid.

Thus, the container can be separated into the body and the lid and the lid can be removed from the body. Further, because of attaching the water lifting pipe to the lid, the inside of the body can be easily accessed in the state where the lid is removed from the body. Accordingly, an operation, such as placement or displacement of aquatic creatures with respect to the body, cleaning of the inner surface of the body, replacement of a water lifting pipe, or the like can be facilitated.

The air delivery pipe is provided with a valve for adjusting a volume of air supplied, and an amount of water lifted is changeable with degree of opening of the valve.

Thus, because of providing the air delivery pipe with a valve, the amount of water lifted by upwelling can be changed easily. Accordingly, even if a plurality of apparatuses are placed, the amounts of water lifted can be adjusted individually as desired by adjusting each valve.

A structure that includes the container and the water lifting pipe is set so as to be heavier than water and is submersible in the water by being hung and lowered.

Thus, the configuration that enables submersion into water does not require a special device, such as a frame, for supporting the structure during placement (lowering in water). Accordingly, equipment can be downsized.

A plurality of structures are included, each of the structures including the container, the mesh structure, the water lifting pipe, and the air delivery pipe, and air that is supplied from a shared air pump is distributed to the respective air delivery pipes included in the structures.

Thus, sharing an air pump in placing a plurality of apparatuses is advantageous in terms of cost.

### Advantageous Effects of Invention

The present invention can provide techniques that makes it possible to, in an aquatic creature rearing apparatus that employs upwelling by the airlift system, flexibly change the depth of water lifting while securing a sufficient amount of water lifted.

### Brief Description of Drawings

[FIG. 1] A diagram illustrating a rearing apparatus.
[FIG. 2] A cross-sectional view illustrating the rearing apparatus.
[FIG. 3] A diagram illustrating a first technique for adjusting the amount of water lifted in the rearing apparatus.
[FIG. 4] A diagram illustrating a second technique for adjusting the amount of water lifted in the rearing apparatus.
[FIG. 5] A diagram illustrating a third technique for adjusting the amount of water lifted in the rearing apparatus.
[FIG. 6] A diagram illustrating an example of use of the rearing apparatus.
[FIG. 7] A diagram illustrating an example of use of the rearing apparatuses.
[FIG. 8] A diagram illustrating an example of use of the rearing apparatus in a water tank.

### Description of Embodiments

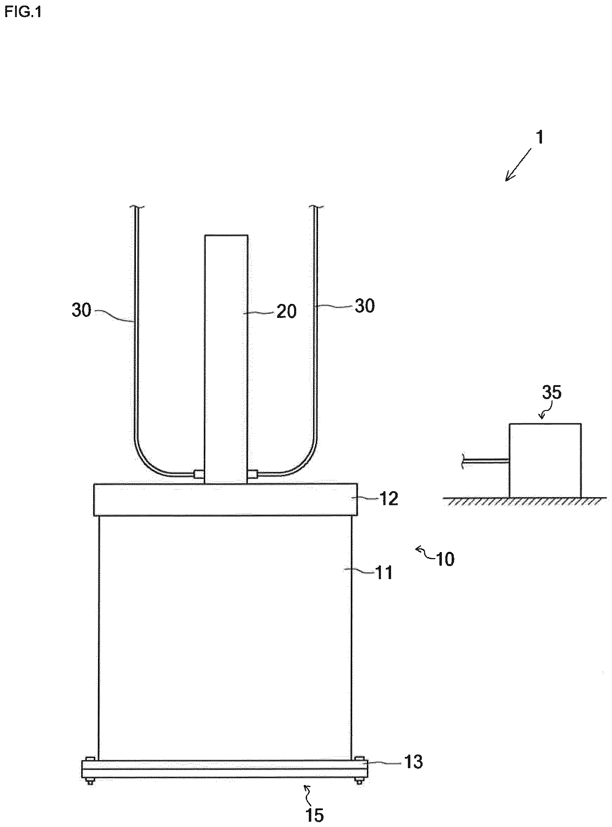

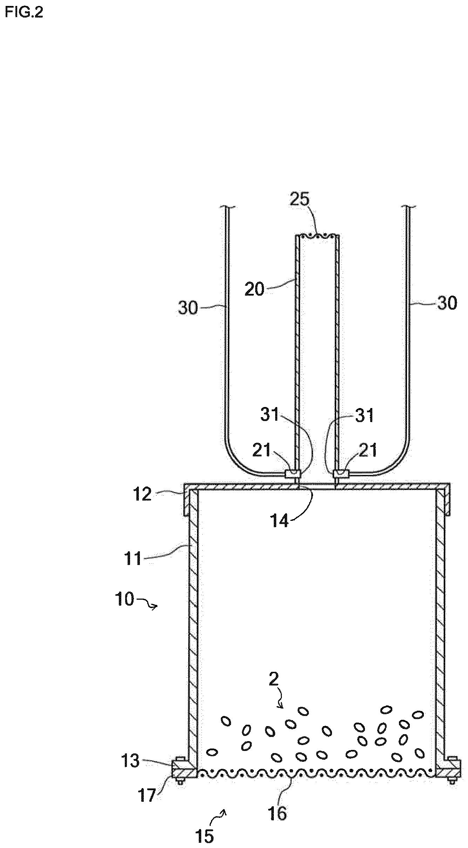

A configuration of a rearing apparatus is described with reference to FIGs. 1 and 2. FIG. 1 is a side view illustrating an overall configuration of a rearing apparatus 1. FIG. 2 is a cross-sectional view illustrating an internal structure of the rearing apparatus 1.

The rearing apparatus 1 is an apparatus for rearing an aquatic creature 2. For example, the aquatic creature 2 is a juvenile shellfish of a bivalve, such as an oyster, a short-necked clam, a common orient clam, an ark shell, a mirugai clam, a heart clam, a purple butter clam, a hard clam, or a california cockle, or is a larva of a sea cucumber. The aquatic creature 2 undergoes intermediate rearing in the rearing apparatus 1. The rearing apparatus 1 causes upwelling by the airlift system and provides feed contained in water to the aquatic creature 2 accommodated in the apparatus.

The rearing apparatus 1 includes a tubular container 10, a mesh structure 15, a water lifting pipe 20, a mesh 25, air delivery pipes 30, and an air pump 35. The tubular container 10 has an opened lower surface. The mesh structure 15 is attached to the lower surface of the container 10. The water lifting pipe 20 is connected to an upper outer surface of the container 10 and extends upward from the container 10. The mesh 25 is attached at an upper end of the water lifting pipe 20. The air delivery pipes 30 are connected to a base of the water lifting pipe 20. The air pump 35 supplies air into the water lifting pipe 20 through the air delivery pipes 30.

The container 10 is made up of a tubular body 11 and a lid 12. The tubular body 11 has an upper surface and a lower surface that are opened. The lid 12 covers the upper surface of the body 11. A flange 13 is provided in an edge portion of the lower surface of the body 11. The mesh structure 15 is attached to the flange 13. The lid 12 serves as an upper surface of the container 10 and is attached to the body 11 so as to be detachable. An opening 14 is provided in a central portion of the lid 12. The water lifting pipe 20 is connected to the opening 14. The container 10 is just required to have a shape like a tube extending vertically (i.e., up-down direction), which may be a cylinder or a quadrangular prism. The aquatic creatures 2 are accommodated in the container 10.

The mesh structure 15 includes a mesh part 16 and a fixing unit 17. The mesh part 16 has mesh spacing suitable for the size of the aquatic creature 2 (that is, mesh spacing fine enough to avoid the aquatic creature 2 falling). The fixing unit 17 serves to fix the mesh part 16 to the flange 13 of the body 11. The mesh part 16 is formed so as to have a size that suits the opening in the lower surface of the body 11. The fixing unit 17 as a frame during a fixing process is provided around the mesh part 16 so as to correspond to the flange 13. The mesh structure 15 according to the present embodiment can be readily adapted to a case where the aquatic creature 2 to be reared is changed if the mesh part 16 is replaced with one having mesh spacing suitable for the size of the aquatic creature 2.

The water lifting pipe 20 is a tubular member that has an opened upper surface and an opened lower surface, extending upward from the container 10. A lower end of the water lifting pipe 20 is fixed to the opening 14 of the lid 12 that serves as the upper surface of the container 10. The water lifting pipe 20 and the inside of the container 10 communicate through the opening 14. The base of the water lifting pipe 20 is provided with air vents 21 to which the air delivery pipes 30 are connected. Air outlets 31 from which air is ejected are provided at distal ends of the air delivery pipes 30. Thus, the air vent 21 as an air blow-off port is provided in a lower portion of the water lifting pipe 20. Accordingly, the airlift effect can be increased and handling of the air delivery pipe 30 can be facilitated.

The present embodiment shows an example in which two air vents, 21, are provided in the lower portion of the water lifting pipe 20 and the air delivery pipes 30 are respectively connected to the air vents 21. However, the number of the air delivery pipes 30 for supplying air to the water lifting pipe 20 is not limited to this example. Instead of being disposed on the base of the water lifting pipe 20, the air vents 21 may be disposed in, for example, an intermediate portion of the water lifting pipe 20. The positions can be set as desired so as to be suitable for required airlift capability and the like.

In the present embodiment, the water lifting pipe 20 is provided on the lid 12 of the container 10 so as to be connected to the upper surface of the container 10. However, the water lifting pipe 20 is just required to be disposed outside the container 10 and the water lifting pipe 20 may be connected to an upper outer surface of the container 10. Further, the water lifting pipe 20 may be connected at two positions on an upper side surface of the container 10.

As described above, the water lifting pipe 20 according to the present embodiment is provided outside the container 10 rather than extending in the container 10. Accordingly, the whole range in the container 10 can be utilized as a rearing space while high-density efficient rearing is enabled. In addition, restraints on placement of the water lifting pipe 20 in the container 10 are removed. As a result, the water level in the container 10 can be adjusted as desired by flexibly changing the length of the water lifting pipe 20. It is also possible to avoid the depth at which larvae of periphytons live by adjusting the water level in the container 10 and changing the water lifting depth as desired.

The rearing apparatus 1 according to the present embodiment has a structure in which the water lifting depth can be changed as desired. Therefore, it is possible to hinder interference of waves by lowering the depth. That is, not only use in a calm and quiet area, such as a culture pond, but use in a water area where waves have effect is also possible. Further, use in a water area suitable for the growing conditions for the aquatic creature 2 to be reared is possible as well.

Moreover, in the present embodiment, the container 10 is made up of the body 11 and the lid 12, and the water lifting pipe 20 is fixed to the lid 12. That is, if the lid 12 is detached from the body 11, the body 11 can be handled as an independent column. Accordingly, access into the body 11 that accommodates the aquatic creatures 2 can be facilitated. In addition, placement or displacement of the aquatic creature 2 and maintenance including cleaning of the inside can be performed easily.

Also, if the lid 12 to which the water lifting pipe 20 is attached is removed from the body 11, maintenance of the water lifting pipe 20 can be performed. For example, at the time of changing the length of the water lifting pipe 20, the operation can be performed easily because of the separation from the body 11 large in size. If the water lifting pipe 20 is formed as a tube extending straight upward from the container 10, maintenance, such as cleaning of an inner surface of the water lifting pipe 20, can be performed easily even in the state of attachment to the lid 12.

Air is supplied from the air pump 35 through the air delivery pipes 30 and bubbles are ejected from the air outlets 31 into the water lifting pipe 20. Water in the tube is lifted by the ejected bubbles rising in the water lifting pipe 20 and an ascending flow occurs in the container 10. Thus, the present embodiment employs the airlift system, in which the water lifting pipe 20 is provided above the container 10 and bubbles from the air pump 35 as a water lifting driver are ejected in the lower portion of the water lifting pipe 20 so that upwelling occurs in the container 10.

The air delivery pipe 30 is, for example, a long tube having flexibility, such as an air hose. The air pump 35 connected to the air delivery pipes 30 is placed in a predetermined position on land (or on a floating body) where setting environment is favorable. For example, the container 10 to which the water lifting pipe 20 is attached is disposed in water while the air delivery pipes 30 are caused to extend outward and the air pump 35 is placed in a building on land or a roofed and walled structure on a floating body. If the air pump 35 is kept out of contact with the water in this manner, corrosion of the air pump 35 can be hindered and its maintainability can be increased.

The mesh 25 is attached at the upper end of the water lifting pipe 20. The mesh 25 is a reticular member with mesh spacing suitable for the size of the aquatic creature 2. Thus, the rearing apparatus 1 is contrived so that the mesh structure 15 provided under the container 10 and the mesh 25 provided on the water lifting pipe 20 form an isolated space inside so as not to allow the accommodated aquatic creatures 2 to be dispersed outside. In such a configuration, not only the inside of the container 10 but the inside of the water lifting pipe 20 can also be used as a rearing space. Accordingly, the rearing capacity in the rearing apparatus 1 ranges from the lower surface of the container 10 to the upper end of the water lifting pipe 20. As a result, high-density rearing is enabled. The mesh 25 may be attached in a given position inside the water lifting pipe 20 in view of avoidance of dispersion of the aquatic creatures 2. Instead of the outlet portion at the upper end of the water lifting pipe 20, the position can be set to an intermediate portion or a basal portion of the water lifting pipe 20, taking characteristics of the aquatic creature 2, conditions for a rearing water area, and the like into account.

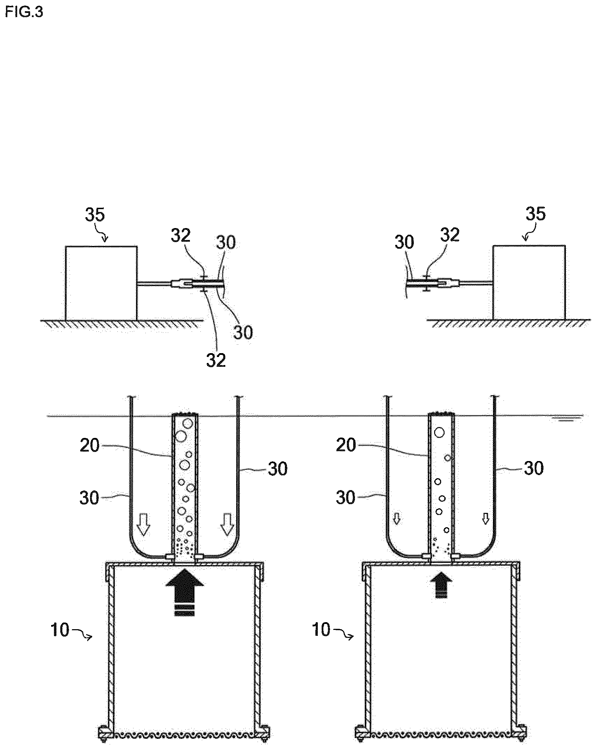

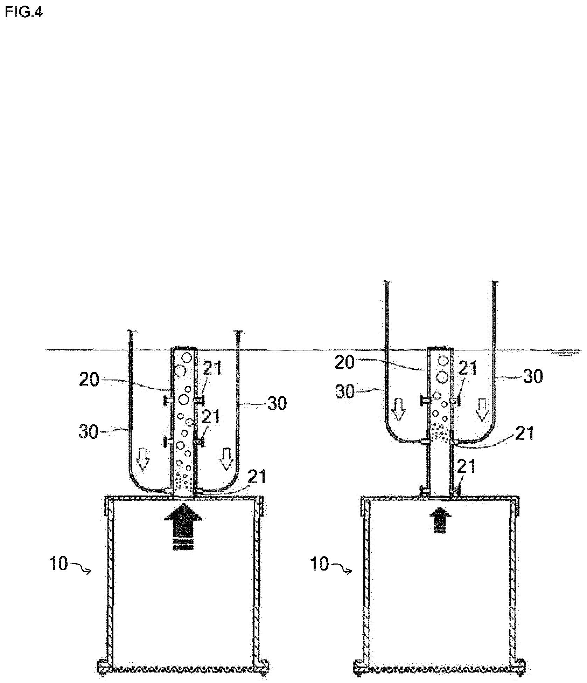

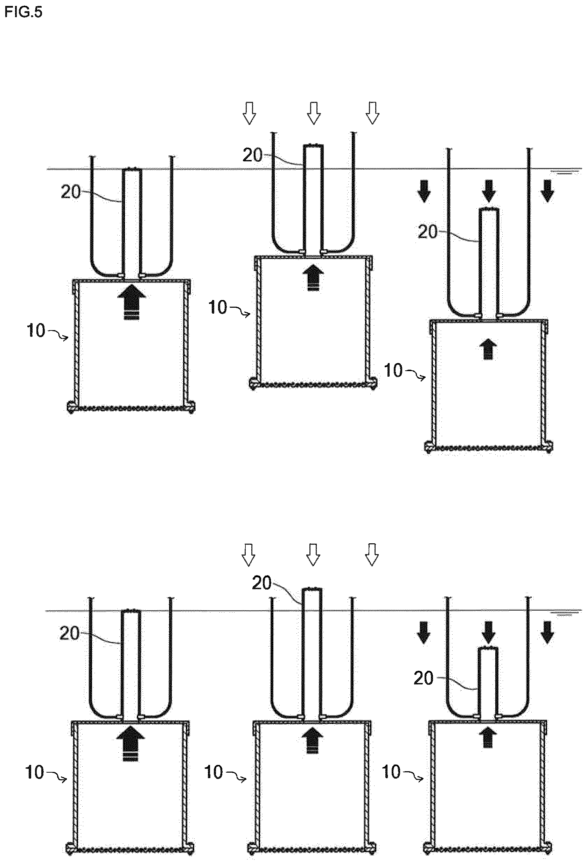

When the rearing apparatus 1 configured as described above is used, in a state where the container 10 accommodating the aquatic creatures 2 and the water lifting pipe 20 attached to the container 10 are submerged in water, air is supplied from the air pump 35 into the water lifting pipe 20. Three techniques for changing the amount of water lifted are described below with reference to FIGs. 3 to 5. FIG. 3 illustrates an embodiment in which the amount of water lifted is adjusted by changing the volume of air supplied from the air pump 35. FIG. 4 illustrates an embodiment in which the amount of water lifted is adjusted by changing the total volume of the air in the water lifting pipe 20. FIG. 5 illustrates an embodiment in which the amount of water lifted is adjusted by changing the position of the upper end of the water lifting pipe 20.

As illustrated in FIG. 3, in the first technique, the amount of water lifted is adjusted by changing the volume of air delivered into the water lifting pipe 20. That is, the water lifting capability by the airlift action is made changeable by changing the amount of bubbles mixed into the water.

Examples of means for changing the volume of the air delivered to the water lifting pipe 20 include to provide a valve 32 in the air delivery pipe 30 and adjust the volume of the air that passes through the air delivery pipe 30 according to the degree of opening of the valve 32 (see FIG. 3). If the air delivery pipe 30 is provided with the valve 32 that adjusts the supply volume and if a plurality of rearing apparatuses, 1, are disposed, the respective amounts of water lifted for the rearing apparatuses 1 can be individually adjusted easily.

In addition, it is also possible to adjust the volume of air supplied to the air delivery pipe 30 by changing the output of the air pump 35 or to use both the adjustment by the valve 32 and the adjustment by the air pump 35. If the output of the air pump 35 is changed, it is facilitated to adjust the amounts of water lifted in the disposed rearing apparatuses 1 evenly as a whole and equalize the rearing conditions.

As illustrated in FIG. 4, the second technique is for changing the total volume of air mixed with the water in the water lifting pipe 20. That is, by changing the position of air supply to the water lifting pipe 20 without changing the volume of air supplied from the air pump 35, the total volume of the air that remains in the water lifting pipe 20 is changed according to the length from the air supply unit to the upper end of the water lifting pipe 20 (the length of mixture of air).

For example, it is conceivable to provide the plurality of air vents 21 of the water lifting pipe 20 in the direction in which the water lifting pipe 20 extends and change the positions at which the air delivery pipes 30 are connected. Accordingly, the positions at which air is supplied into the water lifting pipe 20 can be changed and the total volume of air can be adjusted. That is, if the air delivery pipes 30 are connected to the air vents 21 provided on the base of the water lifting pipe 20, the total volume of air can be maximized. In contrast, if the air delivery pipes 30 are connected to the air vents 21 provided toward the distal end, the total volume of air can be reduced according to the distance from the connected air vents 21 to the upper end of the water lifting pipe 20.

As described above, the first technique and the second technique enable the amount of water lifted to be changed without changing the position of the container 10, that is, without changing the water lifting depth.

As illustrated in FIG. 5, the third technique is for changing the position of the upper end of the water lifting pipe 20, that is, the position of the outlet of an ascending flow caused by upwelling to change pressures (water pressure and atmospheric pressure) against the outlet portion. That is, if the upper end of the water lifting pipe 20 is positioned at 0 m from the water surface, the amount of water lifted is the largest, and the amount of water lifted can be decreased by raising the water lifting pipe 20 from the water surface. The amount of water lifted can also be decreased by lowering the upper end of the water lifting pipe 20 under the water surface. Thus, the amount of water lifted can be adjusted by changing the position of the upper end of the water lifting pipe 20 as appropriate and applying the water pressure or atmospheric pressure as resistance against the ascending flow.

As illustrated in the upper part of FIG. 5, the position of the upper end of the water lifting pipe 20 can be changed to adjust the amount of water lifted as desired by raising or lowering the container 10 and the water lifting pipe 20. In addition, as illustrated in the lower part of FIG. 5, the amount of water lifted can be adjusted as desired by changing the position of the upper end of the water lifting pipe 20 without changing the depth at which the container 10 is disposed. This is because the length of the water lifting pipe 20 can be changed as described above.

The first to third techniques for changing the amount of water lifted, which are illustrated in FIGs. 3 to 5, respectively, can be combined mutually to be used.

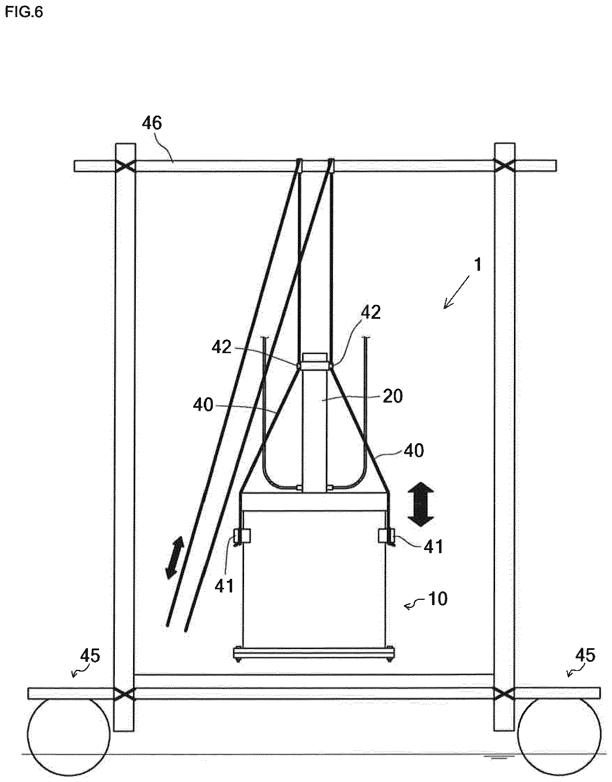

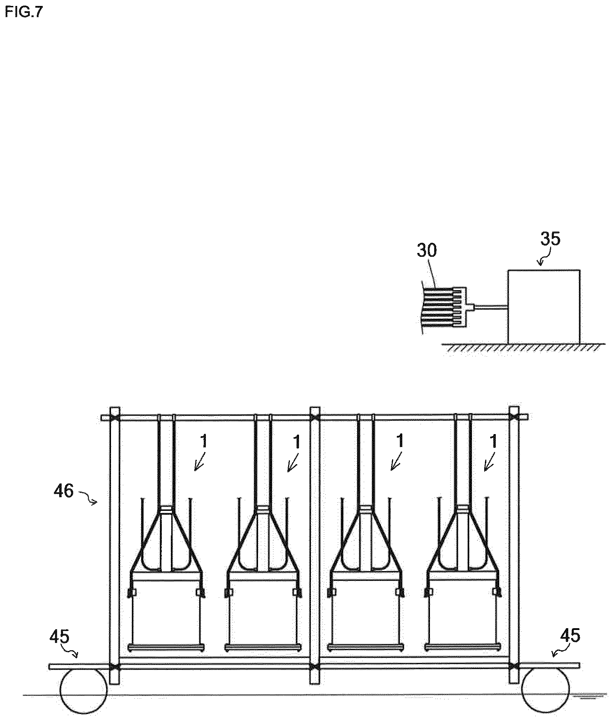

Next, equipment for submerging the rearing apparatus 1 into water is described with reference to FIGs. 6 and 7. FIG. 6 illustrates an example in which a single rearing apparatus 1 is used, presenting an embodiment in which ropes 40 are used to raise or lower the container 10 and the water lifting pipe 20. FIG. 7 illustrates an example in which the plurality of rearing apparatuses 1 are used.

As illustrated in FIG. 6, stays 41 for fixing the ropes 40 for the raising or lowering are provided on outer side surfaces of the container 10 and guides 42 for allowing the ropes 40 to pass therethrough are provided in an upper portion of the water lifting pipe 20. The rope 40 is an example of a means for raising or lowering the container 10 and the water lifting pipe 20. The ropes 40 are hung on a frame 46, which is provided on a floating body 45 placed on water, and then caused to pass through the guide 42 to be fixed at the stays 41. The two stays 41 are disposed at symmetrical positions on the outer surface of the container 10. Similarly, the two guides 42 are disposed at symmetrical positions on the outer surface of the water lifting pipe 20. Thus, such a configuration enables the container 10 and the water lifting pipe 20 to be raised or lowered stably.

In submerging the container 10 and the water lifting pipe 20 of the rearing apparatus 1, each of the provided ropes 40 are drawn down and the container 10 is set to a desired depth. That is, in the rearing apparatus 1 according to the present embodiment, water lifting depth can be adjusted easily through roping work for the ropes 40. The ropes 40 can be drawn up or down by, for example, human hand or using a winding up/down device, such as a winch or the like.

A structure that includes the container 10 and the water lifting pipe 20 to be submerged into water when used is set so as to be heavier than the water. Accordingly, a raising/lowering means by hanging using rope or the like can be employed in submerging the container 10 and the water lifting pipe 20 without extra use of a lowering means. As long as a device for hanging above the water is prepared, no restraint on placement is caused. Further, no special device is required in placing the rearing apparatus 1. For example, unlike the conventional FLUPSY, to provide a floating body with a frame for supporting the rearing container is unneeded. As a result, the degree of flexibility in placement position can be increased while attaining simplification and downsizing of equipment.

If the plurality of rearing apparatuses 1 are used as illustrated in FIG. 7, the floating bodies 45 and the frame 46 that are sized according to the number of the used rearing apparatuses 1 are prepared. Similar to a case where the rearing apparatus 1 is used solely, the ropes 40 are used for the raising or lowering. The rearing apparatus 1 according to the present embodiment just requires preparation of equipment for submerging respective structures of the containers 10 and the water lifting pipes 20 into water even if the plurality of rearing apparatuses 1 are used. Accordingly, downsizing of equipment can be attained.

In a case where the plurality of rearing apparatuses 1 are placed, it may be acceptable that a plurality of structures are prepared, each of which has a configuration obtained by removing the air pump 35 from the rearing apparatus 1, and air is distributed from the single air pump 35 to each of the air delivery pipes 30. Thus, sharing of an air pump is enabled. In this case, if the distribution unit is provided with valves for adjusting the volumes of air to be delivered, the amounts of water lifted in the rearing apparatuses 1 can be adjusted individually. If all of the rearing apparatuses 1 are used under similar conditions (at similar water lifting depths), the rearing conditions can be equalized by winding each rope 40 upward or downward with a common winch.

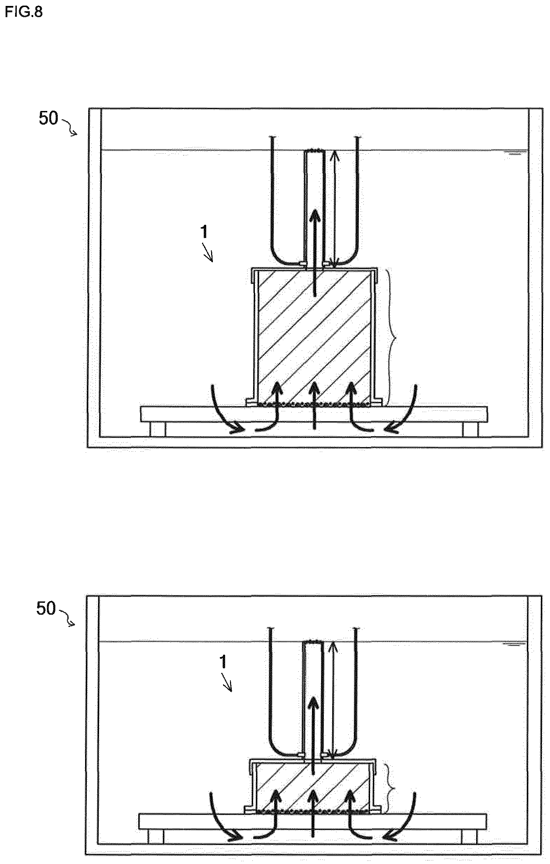

As illustrated in FIG. 8, the rearing apparatus 1 can be used in a water tank 50. The water tank 50 is an isolated water area having predetermined dimensions and planktons as feed for the aquatic creatures 2 are contained in the water. As illustrated in the lower part of FIG. 8, even if the water tank 50 is small in height, reducing the height of the body 11 of the container 10 enables the utmost use of the rearing space of the water tank 50 while securing the length of the water lifting pipe 20 to obtain a sufficient amount of water lifted.

### Industrial Applicability

The present invention is applicable to techniques for efficiently rearing aquatic creatures, such as bivalves including oysters, short-necked clams, common orient clams, ark shells, mirugai clams, heart clams, purple butter clams, hard clams, california cockles, etc., or sea cucumbers.

### Reference Signs List

- 1: rearing apparatus
- 2: aquatic creature
- 10: container
- 11: body
- 12: lid
- 15: mesh structure
- 16: mesh part
- 17: fixing unit
- 20: water lifting pipe
- 25: mesh
- 30: air delivery pipe
- 32: valve
- 35: air pump

## Claims

1. An aquatic creature rearing apparatus comprising:
a tubular container with an opened lower surface;
a mesh structure that is attached to the lower surface of the container and has mesh spacing dependent on size of an aquatic creature accommodated in the container;
a water lifting pipe that is connected to an upper outer surface of the container and comes into communication with inside of the container;
an air delivery pipe that is connected to a base of the water lifting pipe; and
an air pump that supplies air into the water lifting pipe through the air delivery pipe, wherein
an ascending flow is generated in the container and water lifting pipe by airlift action by operating the air pump to cause bubbles in the water lifting pipe.

2. The aquatic creature rearing apparatus according to claim 1, wherein
a mesh is provided on an inner surface of the water lifting pipe, the mesh having mesh spacing dependent on the size of the aquatic creature accommodated in the container.

3. The aquatic creature rearing apparatus according to claim 1 or 2, wherein
the container includes
a tubular body with an upper surface and a lower surface that are opened, and
a lid that covers the upper surface of the body and is attached to the body so as to be detachable as desired, and
the water lifting pipe is connected to the lid.

4. The aquatic creature rearing apparatus according to any one of claims 1 to 3, wherein
the air delivery pipe is provided with a valve for adjusting a volume of air supplied, and
an amount of water lifted is changeable with degree of opening of the valve.

5. The aquatic creature rearing apparatus according to any one of claims 1 to 4, wherein
a structure that includes the container and the water lifting pipe is set so as to be heavier than water and is submersible in the water by being hung and lowered.

6. The aquatic creature rearing apparatus according to any one of claims 1 to 5, wherein
a plurality of structures are included, each of the structures including the container, the mesh structure, the water lifting pipe, and the air delivery pipe, and
air that is supplied from a shared air pump is distributed to the respective air delivery pipes included in the structures.
